# EUROPEAN PATENT SPECIFICATION

(11) **EP 1 873 187 B1**
(45) Date of publication and mention of the grant of the patent: **16.05.2012**
(21) Application number: 06731680.2
(22) Date of filing: 12.04.2006
(51) Int. Cl.: C08G 65/30

(54) **METHOD OF REMOVING RESIDUAL ETHYLENE OXIDE MONOMER FROM POLYETHYLENE OXIDE**
VERFAHREN ZUR ENTFERNUNG VON ETHYLENOXIDMONOMERRESTEN AUS POLYETHYLENOXID
PROCEDE DESTINE A ELIMINER LE MONOMERE RESIDUEL D'OXYDE D'ETHYLENE DANS LE POLYOXYDE D ETHYLENE

(30) Priority: 20.04.2005 JP 2005122663
(43) Date of publication of application: 02.01.2008
(73) Proprietor: SUMITOMO SEIKA CHEMICALS CO., LTD., Kako-gun, Hyogo 675-0145 (JP)
(72) Inventor: KOBAYASHI, Shinji c/o SUMITOMO SEIKA CHEMICALS CO., LTD.., Hyogo 6728076 (JP); TERAMOTO, Masaki c/o SUMITOMO SEIKA CHEMICALS CO., LTD., Hyogo 6728076 (JP); KATOU, Makoto c/o SUMITOMO SEIKA CHEMICALS CO., LTD., Hyogo 6728076 (JP); IDO, Tohru c/o SUMITOMO SEIKA CHEMICALS CO., LTD., Hyogo 6728076 (JP)
(74) Representative: Nicholls, Kathryn Margaret
(86) International application number: PCT/JP2006/307734
(87) International publication number: WO 2006/115056

(56) References cited:
- EP-A- 0 514 870
- JP-A- 7 062 083
- JP-A- 05 156 001
- JP-A- 07 062 083
- JP-A- 10 195 191
- JP-A- 2005 048 037

## Description

### Technical Field

The present invention relates to a method of removing a residual ethylene oxide monomer in polyethylene oxide.

Polyethylene oxide has hitherto been used in a variety of utilities such as pulp dispersants, resin modifiers, binders, aggregating agents, cleaning agents, personal care goods, hygienic goods, cosmetics, medicaments and quasi drugs due to excellent aggregating action, dispersing action, and thickening action. In recent years, the case of using particles of high-molecular weight polyethylene oxide having a weight-average molecular weight of 100000 or more as a raw material for pharmaceutical preparations has been more popular year by year, and a demand for the formability, such as a hardness of tablets at a time of manufacturing preparations in pharmaceutical manufacturers, is increasing.
Generally, a minor amount of around 10 to 20 ppm of an ethylene oxide monomer remains in products of polyethylene oxide obtained by the conventional polymerization method. Since this ethylene oxide monomer has toxicity to a living body such as teratogenicity and carcinogenicity, when it is used in utility such as medicaments, it is required to remove a residual ethylene oxide monomer in polyethylene oxide.

However, since it is required to make a polyethylene oxide molecule move actively in order to reduce a concentration of a residual ethylene oxide monomer in particles of the high-molecular weight polyethylene oxide to a trace level, it is quite difficult to reduce it simply by the usual extraction treatment. Therefore, as the method of removing a residual ethylene oxide monomer in high-molecular weight polyethylene oxide particles, a method of heating polyethylene oxide particles to a temperature in a range of 40 to 65 °C while stirring and treating them under reduced pressure of 200 mmHg or lower is proposed (Patent Document 1). Furthermore, a method of reducing a concentration of residual ethylene oxide by heating polyethylene oxide particles to near a melting point of polyethylene oxide crystals in the presence of a minutely crushed particulate solid material which is capable of inhibiting aggregation of polyethylene oxide particles is also proposed (Patent Document 2).
Although both methods are capable of reducing a concentration of residual ethylene oxide efficiently, since they stir polyethylene oxide particles by heating them to a melting initiation temperature of polyethylene oxide or higher, a specific surface area of those particles is decreased and, when used in utility such as pharmaceutical preparations, the performance requirement for the formability such as a hardness of tablets is reduced. Furthermore, according to the method proposed in the Patent Document 2, since polyethylene oxide is heat-treated around a crystal melting point, fumed silica or alumina is added for the purpose of preventing a part of a surface of polyethylene oxide particles from melting and fusing each other. However, a degree of purity of the polyethylene oxide containing such additives is decreased, and, in some cases, it cannot be used.

Patent Document 1: JP-A No. 7-62083
Patent Document 2: JP-A No. 5-156001

### Disclosure of the Invention

### Problems to be solved by the invention

An object of the present invention is to provide a method of removing a residual ethylene oxide monomer in polyethylene oxide having a weight-average molecular weight of 100000 or higher by a simple process.

### Means of solving the problems

The present invention provides a method of removing a residual ethylene oxide monomer from a powder of polyethylene oxide having a weight-average molecular weight of 100000 or higher by maintaining the powder of polyethylene oxide at a temperature not higher than the crystal melting point of the polyethylene oxide, in the absence of an aggregation inhibitor, under atmospheric pressure and in the standing state and, then, cooling it to 40 °C or lower under atmospheric pressure and in the standing state, wherein the residual ethylene oxide monomer concentration is reduced to 1 ppm or lower.

### Advantageous effect of the invention

According to the method of the present invention, the concentration of a residual ethylene oxide monomer in polyethylene oxide having a weight-average molecular weight of 100000 or higher can be easily reduced to 1 ppm or lower and change in physical properties of polyethylene oxide particles is suppressed, for example, occurrence of an aggregate previously observed at heating under stirring and reduction in a specific surface area of polyethylene oxide particles closely related to a hardness of pharmaceutical preparations become less frequent. Furthermore, since the method does not necessitate addition of a particular aggregation inhibitor at removal treatment, no impurity gets mixed and polyethylene oxide which is optimal for utility such as foods and medicaments can be obtained.

### Brief Description of the Drawings

[Fig. 1] Fig. 1 shows a graph illustrating relationship between a temperature for heating treatment, days of heating treatment for achieving a concentration of a residual ethylene oxide monomer of 1 ppm or lower, and the concentration of a residual ethylene oxide monomer after the achievement.
[Fig.. 2] Fig. 2 shows a graph illustrating relationship between a temperature for heating treatment, days of heating treatment for achieving a concentration of a residual ethylene oxide monomer of 1 ppm or lower, and a specific surface area after the achievement.
[Fig. 3] Fig. 3 shows a graph illustrating relationship between a temperature for heating treatment, days of heating treatment for achieving a concentration of a residual ethylene oxide monomer of 1 ppm or lower, and a hardness of tablets after the achievement.

### Best Mode for Carrying Out the Invention

The following is the detailed explanation of the present invention.
In the present invention, first, polyethylene oxide having a weight-average molecular weight of 100000 or higher is retained at a particular temperature in the absence of an aggregation inhibitor under an atmospheric pressure and in the standing state. Examples of the method of retaining polyethylene oxide under the above-described condition is not limited to, but include a method of allowing the polyethylene oxide filled in a container such as a fiber drum to stand in a heat-retaining reservoir capable of regulating a temperature, and a method of allowing the polyethylene oxide to stand in a facility equipped with a heatable jacket such as a dryer.
Particularly, in the latter case, by flowing in a gas such as nitrogen heated at preferably 45 to 65 °C, more preferably 50 to 60 °C, or by improving a rate of heat conduction by formulating polyethylene oxide into a slurry using a poor solvent for polyethylene oxide such as n-hexane, n-heptane and the like, a time for reaching a specified temperature can be shortened, thus, prompting removal of a residual ethylene oxide monomer.

It is preferable that a residual ethylene oxide monomer is removed under an atmospheric pressure and in the standing state.

When a residual ethylene oxide monomer is removed under reduced pressure, since it is not economical because of the necessity of a special equipment for reducing a pressure, the monomer is removed under an atmospheric pressure in the present invention.

Generally, polyethylene oxide is a crystalline material having a crystal melting point (softening and adhering point) at about 65 °C, thus, at around a crystal melting point, molecular movement becomes active and polyethylene oxide softens and becomes adhesive. When shearing such as stirring is added in that state, a particle surface becomes smoothing and aggregation among particles occurs and then a specific surface area is reduced. In addition, since low-molecular polyethylene oxide meltable at around 45 °C that is lower than a crystal melting point is present due to the presence of a distribution of a molecular weight, polyethylene oxide particles adhere even at around 45 °C which does not reach a crystal melting point by operation like stirring. Therefore, not only it becomes difficult to recover particles in a good form of a powder, but also physical properties of polyethylene oxide after treatment, particularly a specific surface area closely related to the formability of the tablet is reduced, and a hardness of tablets is reduced. Therefore, in the present invention, removal of a residual ethylene oxide monomer is performed in the standing state.

As for a temperature at while polyethylene oxide is retained in the standing state, from a viewpoint of recovering polyethylene oxide particles in good condition, 45 °C to 65 °C is preferable,50 to 60 °C is more preferable. When polyethylene oxide is retained at a temperature higher than 65 °C, fusion occurs even without the operation like stirring and it is impossible to recover polyethylene oxide particles in good condition. On the other hand, when retained at a temperature lower than 45 °C, it takes quite a long time to remove a residual ethylene oxide monomer, being not economical.
A retention time for removing a residual ethylene oxide monomer is different depending on a treatment temperature and initial and intended final concentrations of the residual ethylene oxide monomer. For example, when a concentration of a residual ethylene oxide monomer in polyethylene oxide is reduced from 10 ppm to 1 ppm or lower, it takes about 120 days at 35 °C, but only two days at 65 °C to achieve the reduction.

As stated above, the present invention comprises retaining polyethylene oxide having a weight-average molecular weight of 100000 or higher at preferably 45 °C to 65 °C in the absence of an aggregation inhibitor under an atmospheric presence and in the standing state to reduce a concentration of a residual ethylene oxide monomer to preferably 1 ppm or lower and, thereafter, cooling subsequently it to a particular temperature or lower while maintaining the condition.
Since polyethylene oxide as a polymer material has a distribution of molecular weight, it is predicted that high-molecular weight polyethylene oxide having a weight-average molecular weight of 100000 or higher also contains a low-molecular weight entity which melts even at about 45 °C lower than a crystal melting point. Due to existence of such the low-molecular weight polyethylene oxide, it is predicted that adhesion among particles will occur even at a low temperature which is lower than a crystal melting point by operation like stirring. Therefore, for preventing a decrease of a specific surface area of polyethylene oxide, it is important to cool polyethylene oxide to 40 °C or lower, preferable to 20 to 35 °C in the standing state after finishing a step of removing residual ethylene oxide.
The method of cooling is not particularly limited, but examples include a method of changing a temperature to specified one in a temperature-retaining reservoir. In addition, a cooling time, a cooling rate, etc. are also not particularly limited.

### Examples

The present invention will be described in more detail below by way of Examples, but is not limited to only these Examples.

### Measuring method

A concentration of a residual ethylene oxide monomer in polyethylene oxide, a hardness of tablets and a specific surface area in Examples and Comparative Examples were obtained as follows:

### (1) Concentration of residual ethylene oxide monomer in polyethylene oxide

Into a 50 mL vial is placed 2 g of a polyethylene oxide sample, the vial is sealed and retained at 70 °C for 120 minutes to vaporize residual ethylene oxide in polyethylene oxide, a part of gas in a headspace is taken out, and subjected to gas chromatography, and peak area of ethylene oxide is determined. Separately, a peak area is similarly determined and a calibration curve is produced by using a standard sample having the known ethylene oxide content. The content of ethylene oxide in the polyethylene oxide sample is calculated from the calibration curve and is converted into a concentration of a residual ethylene oxide monomer in the polyethylene oxide sample.

In addition, a tolerable range of a concentration of a residual ethylene oxide monomer is 1 ppm or lower.

### (2) Hardness of tablets

A cylindrical mortar having a diameter of 10.7 mmϕ is filled with 0.5 g of polyethylene oxide particles, circular tablets are formed at a tableting pressure of 8 kN using an autograph AGS-J manufactured by SHIMADZU CORPORATION and a hardness of resulting tablets is determined using a hardness gauge, TBH200 manufactured by ERWEKA.

In addition, a tolerable range of a hardness of tablets is 45 kp or higher.

### (3) Specific surface area

A specific surface area is determined using Surface Area and Pore Size Analyzer(SA3100 manufactured by BECKMAN COULTER CORPORATION) by a BET multipoint method.

In addition, a tolerable range of a specific surface area is 1.6 m²/g or more.

### Example 1

A 1L stainless-steel flask equipped with a stirrer was charged with 200 g of a polyethylene oxide powder(PEO-18Z manufactured by SUMITOMO SEIKA CHEMICALS CO., LTD. average molecular weight of about 5 million, ethylene oxide monomer content of 10 ppm) and this was stored by allowing to stand in a temperature-controlled room at 35 °C for 120 days and, subsequently, cooled to 30 °C while allowing to stand.

The resulting polyethylene oxide powder was measured for a residual ethylene oxide monomer concentration, a hardness of tablets and a specific surface area by the aforementioned method. And also, a powder form at acquisition was confirmed and shown in Table 1.

### Example 2

According to the same manner as that of Example 1 except that the temperature for storing in the standing state was changed to 45 °C and the storage term was changed to 30 days, resultant polyethylene oxide powder was assessed, and results are shown in Table 1.

### Example 3

According to the same manner as that of Example 1 except that the temperature for storing in the standing state was changed to 55 °C and the storage term was changed to 10 days, resultant polyethylene oxide powder was assessed, and results are shown in Table 1.

### Example 4

According to the same manner as that of Example 1 except that the temperature for storing in the standing state was changed to 55 °C, the storage term was changed to 7 days, and a nitrogen(N₂) gas heated to 55 °C was introduced into a temperature-controlled room during storage, resultant polyethylene oxide powder was assessed, and results are shown in Table 1

### Example 5

According to the same manner as that of Example1except that the temperature for storing in the standing state was changed to 65 °C and the storage term was changed to 2 days, resultant polyethylene oxide powder was assessed, and results are shown in Table 1.

### Comparative Example 1

A 1L stainless-steel flask equipped with a stirrer was charged with 200g of a polyethylene oxide powder(PEO-18Z manufactured by SUMITOMO SEIKA CHEMICALS CO., LTD. average molecular weight of about 5 million, ethylene oxide monomer content of 10 ppm), and this was stirred in a temperature-controlled room at 55 °C for 10 days and, subsequently, cooled to 30 °C while stirring was continued.

The resulting polyethylene oxide powder was measured for a content of a residual ethylene oxide monomer, a hardness of tablets and a specific surface area by the aforementioned method. And also, a form of a powder at acquisition was confirmed and shown in Table 1.

### Comparative Example 2

According to the same manner as that of Comparative Example 1 except that the temperature for storing was changed to 65 °C and the stirring term was changed to 2 days, the resultant polyethylene oxide powder was assessed, and results are shown in Table 1.

### Comparative Example 3

According to the same manner as that of Example 1 except that the temperature for storing in the standing state was changed to 67 °C and the storage term was changed to 1 day, the resultant polyethylene oxide powder was assessed, and results are shown in Table 1.

### Comparative Example 4

According to the same manner as that of Example 3 except that stirring at cooling after allowing to stand at 55 °C was performed, the resultant polyethylene oxide powder was assessed, and results are shown in Table 1.

**Table 1**

| | | Example | | | | | Comparative Example | | | |
|---|---|---|---|---|---|---|---|---|---|---|
| | | 1 | 2 | 3 | 4 | 5 | 1 | 2 | 3 | 4 |
| Temperature for heating treatment [°C] | | 35 | 45 | 55 | 55 | 65 | 55 | 65 | 67 | 55 |
| Time for heating treatment, [day] | | 120 | 30 | 10 | 7 | 2 | 10 | 2 | 1 | 10 |
| Presence or absence of stirring at heating | | Absence | | | | | Presence | | Absence | |
| Inflow of heated N₂ | | Absence | | Presence | | Absence | Absence | | | |
| Presence or absence of stirring at cooling step | | Absence | | | | | Presence | | Absence | Presence |
| Residual ethylene oxide monomer [ppm] | | 0.9 | 0.9 9 | 0.9 9 | 0.8 | 0.5 | 0.9 9 | 0.5 | 0.5 | 0.9 |
| Resultant form of powder | | Power in good condition | | | | | Aggregate | | | |
| Specific surface area [m²/g] | Before treatment | 2.22 | | | | | | | | |
| | After treatment | 2.20 | 2.13 | 2.10 | 2.00 | 1.84 | 1.36 | 0.86 | 0.80 | 1.43 |
| Hardness of tablets [kp] | Before treatment | 49.2 | | | | | | | | |
| | After treatment | 49.2 | 49.2 | 49.2 | 49.2 | 45.7 | 41.4 | 36.2 | 31.3 | 42.0 |

### Experimental results

### (1) Temperature for heating treatment

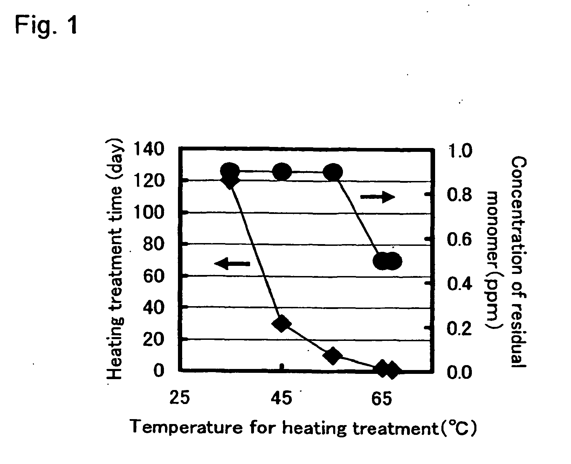

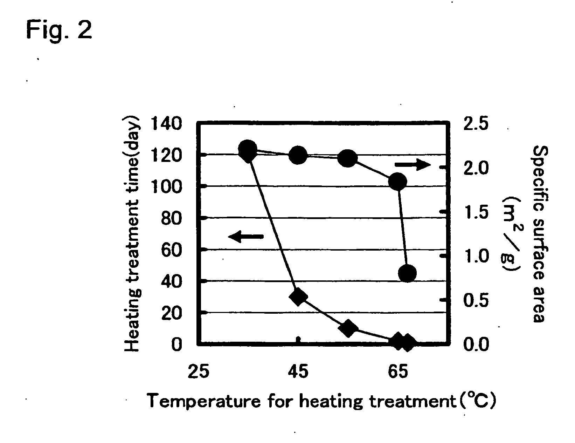

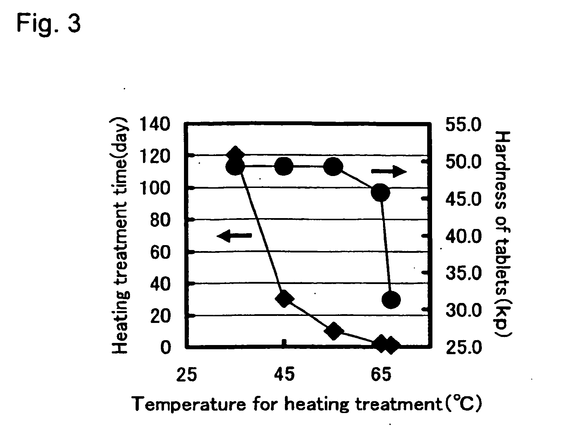

From results of Examples 1 to 5, it was seen that a concentration of a residual ethylene oxide monomer can be reduced to 1 ppm or lower in the standing state either while heating or cooling, a form of the resultant powder is also in good condition, and there was no adverse effect on a specific surface area and on a hardness of tablets, on the condition that the temperature for heating treatment is 65 °C or lower. Particularly, from results of Example 2, it was seen that the treating time is in a practical range of within 30 days, on the condition that the temperature for heating treatment is 45 °C or higher(see Figs. 1 to 3).

And also, from the results of Comparative Example 3, it was seen that, when the temperature for heating treatment exceeds 65 °C, powders are aggregated by melting and, a specific surface area and a hardness of tablets are also decreased, even if the removal treatment is performed in the standing state.

Therefore, upon removal of a residual ethylene oxide monomer from polyethylene oxide particles, when the heating treatment is performed at not lower than 45 °C and not higher than 65 °C, a concentration of a residual ethylene oxide monomer can be reduced to 1 ppm or lower by the practical treating time without deteriorating physical properties of polyethylene oxide particles. When the heating treatment is performed at not lower than 50 °C and not higher than to 60 °C, a concentration of a residual ethylene oxide monomer can be reduced to 1 ppm or lower within a shorter time entirely without deteriorating physical properties of polyethylene oxide particles.

### (2) Influence of stirring on polyethylene oxide powder

In Comparative Example 1 and 2, the powder was stirred in heat-treating and cooling steps. As compared with results of Examples 3 and 5, it was revealed that, although a concentration of a residual ethylene oxide monomer, can not be further reduced even by stirring, a powder form, a specific surface area and a hardness of tablets are adversely affected.

Furthermore, from results of Comparative Example 4, it was seen that a powder form, a specific surface area and a hardness of tablets are adversely affected only by stirring in the cooling step even in the absence of stirring in the heat-treating step.

### Industrial applicability

Accordingly, by using the methods of the present invention, there can be obtained polyethylene oxide, in which a concentration of a residual ethylene oxide can be reduced to 1 ppm or lower from high-molecular weight polyethylene oxide particles while keeping a particle form in the good condition without adding a particular aggregation inhibitor, and a specific surface area and a hardness of tablets greatly influencing on the formability of preparations is slightly changed as compared with those before treatment.

## Claims

1. A method of removing a residual ethylene oxide monomer from a powder of polyethylene oxide, comprising maintaining a powder of polyethylene oxide having a weight-average molecular weight of 100000 or more at a temperature not higher than the crystal melting point of the polyethylene oxide in the absence of an aggregation inhibitor, under atmospheric pressure and in the standing state and, then, cooling the powder of polyethylene oxide to 40 °C or lower under atmospheric pressure and in the standing state, wherein the residual ethylene oxide monomer concentration is reduced to 1 ppm or lower.

2. The method according to claim 1 wherein the powder of polyethylene oxide having a weight-average molecular weight of 100000 or more is maintained at 45 °C to 65 °C, in the absence of an aggregation inhibitor, under atmospheric pressure and in the standing state and, then, cooled to 40 °C or lower under atmospheric pressure and in the standing state.

## Patentansprüche

1. Verfahren zur Entfernung von restlichem Ethylenoxidmonomer aus einem Pulver aus Polyethylenoxid, wobei das Verfahren folgendes umfasst
Halten des Pulvers aus Polyethylenoxid mit einem gewichtsgemittelten Molekulargewicht von 100.000 oder mehr bei einer Temperatur, die nicht höher ist als der Kristallschmelzpunkt des Polyethylenoxids in Abwesenheit eines Aggregationsinhibitors unter atmosphärischem Druck und in einem stehenden Zustand, und anschließend
Kühlen des Pulvers des Polyethylenoxids auf 40°C oder geringer unter atmosphärischem Druck und in einem stehenden Zustand, wobei die restliche Ethylenoxidmonomerkonzentration auf 1 ppm oder geringer verringert wird.

2. Verfahren gemäß Anspruch 1, worin das Pulver des Polyethylenoxids mit einem gewichtsgemittelten Molekulargewicht von 100.000 oder mehr bei 45°C bis 65°C in Abwesenheit eines Aggregationsinhibitors unter atmosphärischem Druck und in einem stehenden Zustand gehalten wird und anschließend auf 40°C oder geringer unter atmosphärischem Druck und in einem stehenden Zustand gekühlt wird.

## Revendications

1. Procédé d'élimination d'un monomère d'oxyde d'éthylène résiduel à partir d'une poudre d'oxyde de polyéthylène, consistant à maintenir une poudre d'oxyde de polyéthylène ayant une masse moléculaire moyenne en poids de 100 000 ou plus à une température non supérieure au point de fusion cristalline de l'oxyde de polyéthylène, en l'absence d'un inhibiteur d'agrégation, sous pression atmosphérique et à l'état stationnaire et, ensuite, à refroidir la poudre d'oxyde de polyéthylène à 40° C ou moins sous pression atmosphérique et à l'état stationnaire, où la concentration en monomère d'oxyde d'éthylène résiduel est réduite à 1 ppm ou moins.

2. Procédé selon la revendication 1, dans lequel la poudre d'oxyde de polyéthylène ayant une masse moléculaire moyenne en poids de 100 000 ou plus est maintenue entre 45° C et 65° C, en l'absence d'un inhibiteur d'agrégation, sous pression atmosphérique et à l'état stationnaire, et est ensuite refroidie à 40° C ou moins sous pression atmosphérique et à l'état stationnaire.
